# EUROPÄISCHE PATENTSCHRIFT

(11) **EP 1 028 206 B1**
(45) Veröffentlichungstag und Bekanntmachung des Hinweises auf die Patenterteilung: **03.11.2004**
(21) Anmeldenummer: 99102669.1
(22) Anmeldetag: 12.02.1999
(51) Int. Cl.: E04F 13/02, E04F 21/00, C03C 25/10

(54) **Verfahren zum Armieren von innenliegenden Wand- und Deckenflächen und Flächenarmierungsmaterial**
Process for reinforcing surfaces of interior walls and ceilings and material for reinforcing surfaces
Procédé de renforcement des murs et plafonds intérieurs et le matériau pour renforcer des surfaces

(43) Veröffentlichungstag der Anmeldung: 16.08.2000
(73) Patentinhaber: Johns Manville Europe GmbH, 60323 Frankfurt am Main (DE)
(72) Erfinder: Hein, Uwe, 63768 Hösbach (DE); Müser, Peter, 63801 Kleinostheim (DE)
(74) Vertreter: Knoblauch, Andreas, Dr.-Ing.

(56) Entgegenhaltungen:
- DE-U- 29 812 797
- US-A- 5 433 997
- DATABASE WPI Section Ch, Week 9116 Derwent Publications Ltd., London, GB; Class A25, AN 91-113895 XP002108757 & JP 03 055353 A (YOSHIDA S), 11. März 1991 (1991-03-11)

## Beschreibung

Die Erfindung betrifft ein Verfahren zum Armieren von innenliegenden Wand- und Deckenflächen, bei dem ein Glasvlies auf eine Fläche aufgeklebt wird. Ferner betrifft die Erfindung ein Flächenarmierungsmaterial für innenliegende Wand- und Deckenflächen mit einem Glasvlies als Basismaterial, das in Bogen-, Platten-, Rollen- oder Bandform vorliegt.

Beim Herstellen und beim Sanieren von Gebäuden ist man bestrebt, die notwendigen Zeiten der Baumaßnahmen so kurz wie möglich zu halten. Damit möchte man die Bau- oder Sanierungskosten verringern. Diese Kosten werden einerseits durch die Arbeitszeit hervorgerufen, die die Handwerker benötigen, um bestimmte Bau- oder Sanierungsmaßnahmen durchzuführen. Andererseits sind die Kosten auch dadurch bedingt, daß man während der Bau- oder Sanierungsmaßnahme Kapital gebunden hat, beispielsweise für bereits geleistete Arbeiten, das Objekt aber nicht nutzen kann.

Dies gilt nicht nur für die Fertigstellung des Rohbaus, sondern vor allem auch für den Innenausbau. Ein maßgeblicher Punkt beim Innenausbau ist das Herrichten und Vorbereiten von Wand- und Deckenflächen. Bevor man diese Flächen tapezieren oder mit Farbe versehen kann, ist es in der Regel notwendig, das Mauerwerk, das beispielsweise aus einzelnen Steinen oder auch aus Betonplatten gebildet sein kann, zu verputzen. Der Putz muß trocknen. Beim Trocknen besteht die Gefahr, daß sich Risse bilden, die später wieder gespachtelt werden müssen. Dies gilt insbesondere dann, wenn zum Beschleunigen des Trocknungsvorganges Wärme in Form von Warmluft zugeführt wird. Der dadurch erzielte Zeitvorteil wird kostenmäßig vielfach durch die notwendigen Nachbesserungsarbeiten wieder aufgehoben.

Es ist bekannt, zum Armieren von derartigen Wand- und Deckenflächen ein Glasvlies zu verwenden. Hierbei wird die Wand, in der Regel nach dem Auftragen und zumindest teilweise trocknen des Putzes, mit einem Kleber eingestrichen. Das Glasvlies wird dann in Bahnen mit der benötigten Länge geschnitten und ähnlich wie eine Tapete auf die Wand aufgeklebt. Das Glasvlies hat hierbei eine glatte Oberfläche, ähnlich wie normales Papier, so daß die mit dem Glasvlies armierte Wandfläche (wenn im folgenden von Wandfläche die Rede ist, gilt dies gleichermaßen für Deckenflächen), abgesehen von der Farbe, aussieht, wie eine sauber verputzte und gespachtelte oder geglättete Wand. Auf dieser Wand kann man dann weitere Gestaltungsmaßnahmen treffen, beispielsweise eine Tapete aufkleben oder die Wand anlegen, d.h. mit einem Anstrich versehen.

Den letztgenannten Fall des Farbauftrages wendet man vielfach dann an, wenn die Wandgestaltung möglichst preisgünstig erfolgen soll. Diese Art der Wandgestaltung bietet sich vor allem in Bereichen an, die öffentlich zugänglich und stark frequentiert sind.

Allerdings erfordert das Anlegen einen zweifachen Farbauftrag. Insgesamt sind also drei Arbeitsschritte notwendig, nämlich Aufkleben und zweimal Anlegen. Zwischen jedem Arbeitsschritt müssen ausreichende Ruhezeiten eingehalten werden, um ein Trocknen des Klebers oder der Farben zu ermöglichen.

Erschwerend kommt hinzu, daß man dann, wenn die Wand lediglich angelegt werden soll, eine relativ sorgfältige Vorbereitung der Wand benötigt. Wenn sich bereits Risse im Putz gebildet haben, müssen diese wieder gespachtelt und verfüllt werden. Wenn man dies unterläßt, dann saugen sich die Risse beim ersten Anlegen des Glasvlieses voll und ändern damit die Farberscheinung auf der Oberseite des Glasvlieses. Um eine gleichmäßige Farbgebung zu erzielen, müßten die Fehlstellen mehrfach überstrichen werden. Dies wiederum führt zu einer Qualitätsminderung, weil derartige Stellen verstärkt zum Glanz neigen.

Der Erfindung liegt die Aufgabe zugrunde, bei verbesserten Ergebnissen die Wirtschaftlichkeit des Innenausbaus zu verbessern.

Diese Aufgabe wird bei einem Verfahren der eingangs genannten Art dadurch gelöst, daß das Glasvlies vor dem Aufkleben gefärbt oder ein vorgefärbtes Glasvlies verwendet wird.

Diese Vorgehensweise hat gleich mehrere Vorteile. Zum einen muß die Vorbehandlung der Wand nicht mehr mit der bislang erforderlichen Sorgfalt erfolgen. Wenn sich Risse im Putz zeigen, können sie belassen werden, solange sie lediglich eine optische Störung bewirken, d.h. der Stabilität des Putzes nicht schaden. Da die Farbe bereits auf dem Glasvlies ist, bevor das Glasvlies an der Wandfläche aufgeklebt wird, besteht nicht die Gefahr, daß die Farbe in den Riß gesaugt wird. Bereits nach dem Aufkleben des Glasvlieses ergibt sich daher ein sehr gleichförmiges Erscheinungsbild der Wand. Beim zweiten Farbauftrag, bei dem die zuletzt aufgetragene Farbe an der bereits auf dem Glasvlies befindlichen Farbe anhaftet, besteht die Gefahr nicht mehr in dem Maße, daß sich die Farbe von den Rissen ansaugen läßt. Darüber hinaus spart man an der Baustelle einen Arbeitsgang. Statt drei sind nur noch zwei Arbeitsgänge notwendig, weil ein einmaliges Anlegen genügt, um die gewünschte Farbgebung zu erzielen. Schließlich kann man in der Regel einen gleichmäßigeren Farbauftrag auf das Glasvlies erreichen, wenn das Glasvlies nicht erst dann eingefärbt wird, wenn es an der Wand klebt. Auch dies verbessert die Ergebnisse.

In einer bevorzugten Ausgestaltung wird das Glasvlies durchgefärbt. Die Farbe befindet sich also nicht nur an der Oberfläche, sondern durchdringt das Glasvlies. Dies hat Vorteile vor allem bei der späteren Benutzung. Kleinere Schrammen oder Kratzer führen dann nicht zu einer sofort sichtbaren Beschädigung, wie es der Fall wäre, wenn bei einer nur oberflächlich aufgetragenen Farbe diese entfernt würde. In diesem Fall könnte man nämlich den darunter liegenden Putz sehen, wodurch Risse oder andere Beschädigungen wieder sichtbar würden.

Wenn hingegen das Glasvlies durchgefärbt ist, müßte man das Glasvlies vollständig durchtrennen, um die Sicht auf den Putz frei zu geben.

Mit Vorteil wird das Glasvlies durch ein Bedrucken gefärbt. Mit einer derartigen Auftragetechnik für die Farbe kann man die Offenporigkeit des Glasvlies erhalten. Dementsprechend kann sowohl der Kleber abdampfen als auch Restfeuchtigkeit im Putz oder im Mauerwerk entweichen. Auch die Gefahr, daß sich beim Aufkleben des Glasvlieses auf der Wand Luftblasen oder ähnliche Störungen bilden, wird drastisch reduziert.

Die Aufgabe wird bei einem Flächenarmierungsmaterial der eingangs genannten Art dadurch gelöst, daß das glasvlies einen Farbauftrag aufweist.

Wie oben im Zusammenhang mit dem Verfahren erläutert worden ist, liegt dann bereits ein vorgefärbtes Armierungsmaterial vor, das auf die Wandfläche aufgeklebt werden kann. Dementsprechend entfällt der Schritt des zweiten Anlegens an der Wand. Der erste Farbauftrag kann beispielsweise bereits bei der Herstellung des Glasvlieses vorgenommen worden sein.

Vorzugsweise durchdringt die Farbe das Glasvlies. Es handelt sich also um ein durchgefärbtes Glasvlies. Kleinere Beschädigungen an der Oberfläche des aufgeklebten Glasvlieses haben dann keine größeren negativen Auswirkungen auf das Erscheinungsbild der Wand. Man kann sich leicht vorstellen, daß beispielsweise im Schulbereich oder in anderen öffentlichen Gebäuden dadurch die Brauchbarkeit des Armierungsmaterials erhöht wird.

Vorzugsweise beträgt die Luftdurchlässigkeit des gefärbten Materials mindestens 40 % des ungefärbten Materials. In der Regel wird sie sogar noch höher sein. Trotz seiner relativ glatt erscheinenden Oberfläche hat Glasvlies an sich eine relativ große Porösität, ist also wasserdampfoffen oder luftdurchlässig. Die Fasern des Glasvlieses, deren Durchmesser in der Größenordnung von 10 µm liegt, liegen, wie dies bei einem Vlies üblich ist, kreuz und quer durcheinander. Zwischen ihnen bleiben kleinste Öffnungen frei, die beispielsweise eine Luftdurchlässigkeit von 2.500 l/(m x s) gewährleisten. Mit dem Farbauftrag wird natürlich auch die Größe dieser Öffnungen etwas verringert. Man kann aber dafür sorgen, daß die Luftdurchlässigkeit immer noch 1.000 bis 1.500 l/(m x s) beträgt.

Vorzugsweise beträgt der Farbauftrag 30 bis 70 % des Flächengewichts. Dies ist eine gut handhabbare Relation. Bei höheren Farbaufträgen besteht die Gefahr, daß die Farbe beim Handhaben, beispielsweise beim Ausrollen des Glasvlieses abplatzt oder abblättert. Bei niedrigeren Anteilen könnte es vorkommen, daß das Glasvlies noch sichtbar bleibt. Bei einem Farbauftrag von 50 % ist der Gewichtsanteil der Farbe genauso groß wie der Gewichtsanteil des Glasvlieses.

Bevorzugterweise besteht der Farbauftrag zumindest 60 % aus mineralischen Farbpigmenten und weist weiterhin ein Bindemittel auf. Damit wird ein relativ hoher Abdekkungsgrad erreicht. Die Farbpigmente werden in den meisten Fällen weiß sein, so daß man nach dem Aufkleben des Glasvlieses eine weiße Wand erhält.

Mit besonderem Vorteil weist der Farbauftrag eine bessere Affinität zu einem Wandkleber auf als das Glas des Glasvlieses. Bislang war es immer notwendig, beim Kleber, mit dem das Glasvlies auf die Wand aufgeklebt wurde, einen Kompromiß einzugehen. Der Kleber mußte einerseits an dem Putz haften, andererseits aber auch an dem Glas des Glasvlieses. Wenn man nun ein vorgefärbtes Glasvlies zum Armieren der Wandflächen verwendet, dann besteht die Oberfläche des Glasvlieses aus einer Farbschicht. Das Material der Farbe hat in der Regel eine größere Ähnlichkeit zum Material des Putzes als das Glas des Glasvlieses. Dementsprechend kann man den Kleber eher auf die Verbindung mit dem Material des Putzes und dem Material der Farbe hin optimieren, so daß man gegebenenfalls mit einer geringeren Klebermenge auskommt.

In einer besonders bevorzugten Ausgestaltung ist vorgesehen, daß das Flächenarmierungsmaterial mit einem Hydrophobiermittel versehen ist.

Als Hydrophobiermittel kann man beispielsweise ein Bautenschutzsilikon verwenden. Die Verwendung eines Hydrophobiermittels hat dabei folgenden Vorteil. Wie oben ausgeführt, ist es zum Befestigen des Armierungsmaterials notwendig, daß ein Klebstoff auf die Wand- oder Deckenfläche aufgetragen wird. Das Glasvlies wird dann auf diesen Klebstoff aufgelegt und angedrückt. Da die Materialbahnen nur eine begrenzte Breite haben, muß man eine Mehrzahl derartiger Bahnen nebeneinander auf die Wand kleben. Um hier saubere Stoßstellen zu erzielen, befestigt man nebeneinander liegende Bahnen so, daß sie einander überlappen. Im Überlappungsbereich führt man dann einen Doppelschnitt aus. Die Kante der "oberen" Glasvliesbahn läßt sich dann ohne weiteres abziehen. Zum Abziehen des Randstreifens der "unteren" Vliesbahn muß die obere Vliesbahn etwas abgehoben werden. Beim Abziehen des Randstreifens der unteren Vliesbahn bleibt üblicherweise eine nicht mehr zu vernachlässigende Menge des Klebstoffs am Randstreifen hängen, so daß nachgekleistert werden muß. Wenn man nun ein Hydrophobiermittel verwendet, dann dringt der Klebstoff nicht so schnell in das Glasvlies ein. Dementsprechend bleibt beim Abziehen der Kantenstreifen auch weniger Klebstoff am Glasvlies hängen. Das Nachkleistern entfällt. Damit dauert es zwar länger, bis das Glasvlies mit der Endfestigkeit an der Wand hängt. Diese Zeit steht aber in der Regel zur Verfügung. Die Hydrophobierung hat darüber hinaus den Vorteil, daß der nachfolgende Farbauftrag mit einer etwas geringeren Farbmenge auskommt. Das Hydrophobiermittel muß lediglich so ausgestaltet sein, daß es den Farbauftrag zuläßt. Dies ist aber bei vielen Dispersionsfarben der Fall, wenn man beispielsweise Bautenschutzsilikon verwendet.

Hierbei ist besonders bevorzugt, daß das Hydrophobiermittel im Farbauftrag enthalten ist. Damit ist sichergestellt, daß das Hydrophobiermittel sowohl an der sichtbaren Seite vorliegt, um das nachfolgende Auftragen der Farbe beim zweiten Anlegen zu erleichtern, also auch an der Wandseite, wo es mit dem Klebstoff in Kontakt kommt. Darüber hinaus wird hiermit die Herstellung des Armierungsmaterials vereinfacht. Es ist lediglich ein einziger Beschichtungsauftrag notwendig.

Die Erfindung wird im folgenden anhand eines bevorzugten Ausführungsbeispiels in Verbindung mit der Zeichnung näher beschrieben. Hierin zeigen:
- Fig. 1: eine zu armierende Wand,
- Fig. 2: eine mit einem herkömmlichen Vlies armierte Wand nach dem ersten Anlegen,
- Fig. 3: eine nach dem erfindungsgemäßen Verfahren armierte Wand,
- Fig. 4: eine schematische Darstellung einer Vliesrolle und
- Fig. 5: einen schematischen Schnitt durch eine mit einem Flächenarmierungsmaterial beklebte Wand in stark vergrößerter Schnittdarstellung.

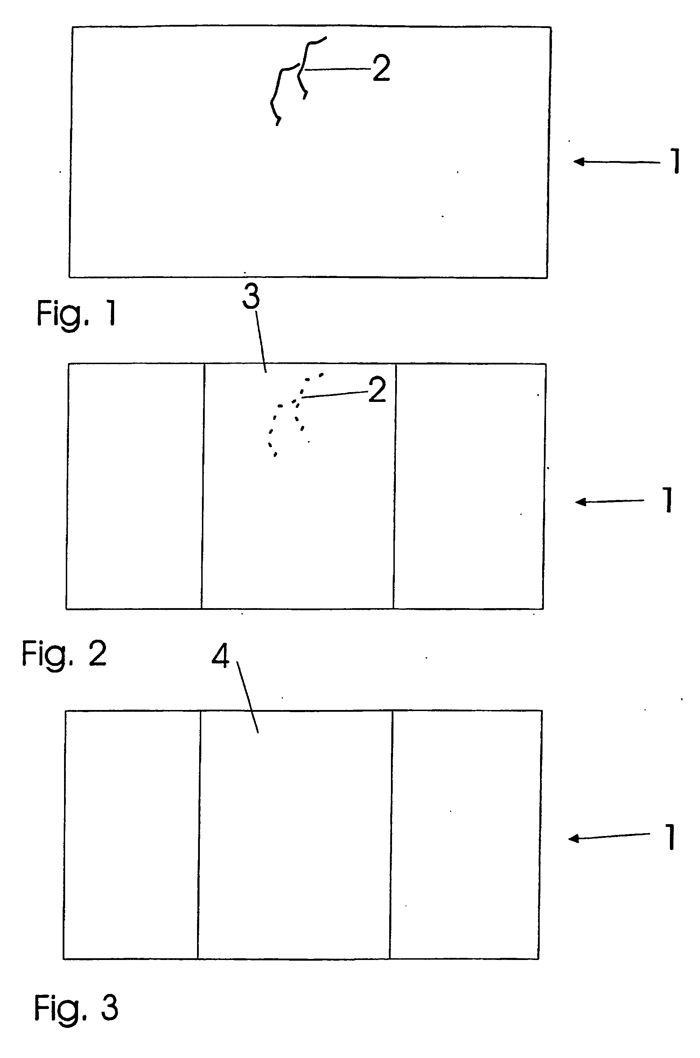

Fig. 1 zeigt eine Wand 1 im Innern eines Gebäudes, die verputzt worden ist. Allerdings hat sich im Lauf der Trocknung des Putzes ein Riß 2 ergeben.

Dieser Riß 2 müßte an und für sich zu gespachtelt werden, bevor man eine weitere Bearbeitung der Wand 1 vornehmen kann. Dieses Spachteln ist arbeits- und zeitaufwendig.

Fig. 2 zeigt nun diese Wand, die mit einem herkömmlichen Glasvlies 3 beklebt ist und einmal angelegt ist, d.h. einmal mit Farbe überstrichen worden ist. Man erkennt immer noch deutlich den Riß 2. Dies ergibt sich dadurch, daß der Riß 2 einen Teil der Farbe aufsaugt. In diesem Bereich fehlt also die Farbe an der Oberfläche des Glasvlieses 3. Dies führt zu einer in der Regel deutlich erkennbaren Farbabweichung des Bereichs am Riß gegenüber den übrigen Bereichen.

Fig. 3 zeigt nun die Wand 1, die mit einem vorgefärbten Vlies 4 beklebt worden ist. Ohne daß die Wand angelegt worden ist, ergibt sich eine glatte und in ihrer Farbgebung homogene Oberfläche, bei der der Riß auch ohne vorherige Nachbehandlung nicht mehr sichtbar ist. Das Glasvlies 4 ist zwar offenporig und damit wasserdampf- und luftdurchlässig. Es ist jedoch aufgrund der vorher aufgetragenen Farbe blickundurchlässig. Auch ein zweiter Farbauftrag, der dann auf das an der Wand festgeklebte Glasvlies aufgetragen wird, bleibt gleichmäßig, weil der erste Farbauftrag, der beispielsweise gleich beim Herstellen des Glasvlies mit aufgebracht worden sein kann, die Farbe in ausreichendem Maße festhält.

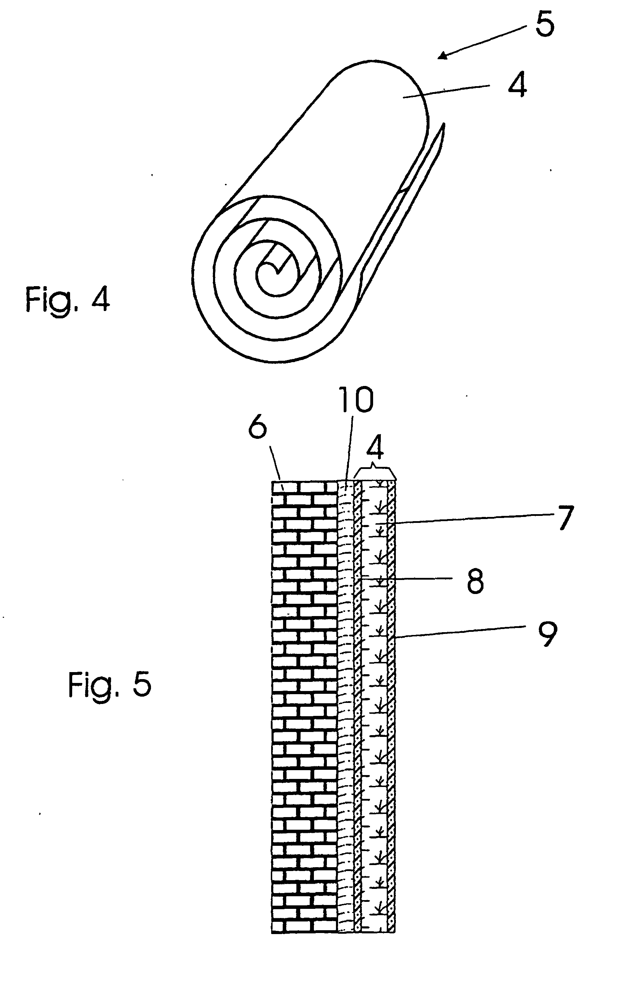

Fig. 4 zeigt nun eine Rolle 5 des Glasvlieses 4, also eine handelsüblich konfektionierte Verpackungseinheit, bei der beispielsweise 10, 50 oder 100 m Glasvlies in Breiten von 60 bis 100 cm aufgerollt vorliegen können. Andere Konfektionierungen sind möglich, beispielsweise in Bogenform, Plattenform oder Bandform. Das Glasvlies 4 auf der Rolle 5 ist bereits eingefärbt. Dementsprechend spart man sich beim Armieren der Wand zwei Arbeitsschritte, nämlich zum einen das Nachbessern des Putzes im Bereich von Rissen und anderen Schäden und zum anderen ein zweites Anlegen.

Fig. 5 zeigt in stark vergrößerter Schnittdarstellung eine Wand 6, die mit dem Glasvlies 4 beklebt ist. Das Glasvlies weist hierbei eine Basis aus einer Glasvliesschicht 7 auf. Durch zwei Farbschichten 8, 9, die auf beiden Oberflächen angeordnet sind, ist schematisch dargestellt, daß das Glasvlies 4 durchgefärbt ist. Zwischen der Mauer 6 und dem Glasvlies 4 befindet sich ein Kleber 10.

Der Kleber 10 muß nun nicht mehr länger dahingehend optimiert sein, daß er sowohl auf der Mauer 6 bzw. dem darauf befindlichen Putz als auch an den Glasfasern haften kann. Er muß lediglich dafür ausgelegt sein, daß er an der Mauer 6 bzw. dem darauf befindlichen Putz und der Farbe 8 haften kann. Die Farbe 8 ist in ausreichendem Maße mit den Glasfasern der Basis 7 verbunden, so daß eine Verbindung zwischen dem Kleber 10 und der Farbe 8 ausreicht, um ein zuverlässiges Verbinden des Glasvlieses 4 mit der Wand 6 zu bewirken.

Das Glasvlies 4 ist auch nach dem Farbauftrag offenporig und damit wasserdampfoffen und luftdurchlässig. Die Basis 7 weist beispielsweise an sich eine Luftdurchlässigkeit von 2.500 l/(m x s) auf. Nach dem Auftrag der Farbe 8, 9 hat sie immer noch eine Luftdurchlässigkeit von 1.500 l/(m x s). Dies reicht aus, um einerseits den Kleber 10 abdampfen zu lassen und andererseits ein Entweichen von Restfeuchtigkeit aus dem Mauerwerk zu ermöglichen.

Das Gewicht des Farbauftrags 8, 9 entspricht etwa dem Gewicht der Basis 7. Abweichungen nach oben oder nach unten sind natürlich in gewissen Grenzen zulässig.

Die Farbe 8 besteht im vorliegenden Fall aus etwa 70 % mineralischen Farbpigmenten und aus Bindemittel und Zusatzstoffen. Damit ist eine ausreichende Farbabdeckung der Basis 7 bzw. der einzelnen Fasern dort gewährleistet.

Die Farbe 8, 9 enthält ein Hydrophobiermittel, beispielsweise Silikone, Alkylchlor- und Alkylalkoxysilane. Im einfachsten Fall lassen sich derartige Bautenschutzsilikone verwenden. Etwas kostenaufwendiger ist Fluorcarbonsäure, die ebenfalls verwendet werden kann. Das Hydrophobiermittel kann auch verwendet werden, wenn der Farbauftrag 8, 9 fehlt. In diesem Fall wird lediglich das Glasvlies 4 unmittelbar mit dem Hydrophobiermittel versehen. Die Verwendung des Hydrophobiermittels führt dazu, daß der Kleber 10 länger braucht, um eine innige Verbindung mit dem Glasvlies 4 einzugehen. Dies hat den Vorteil, daß beim Herstellen der Stoßkanten zwischen benachbarten Glasvliesbahnen nicht mehr nachkleistern muß. Die Bahnen werden, wie bisher auch, überlappend an der Wand festgeklebt. Danach wird im Überlappungsbereich ein sogenannter Doppelschnitt ausgeführt. Der Randstreifen der oberen Glasvliesbahn kann dann ohne weiteres entfernt werden. Der Randstreifen der unteren Glasvliesbahn muß dann vom Kleber 10 abgezogen werden. Dies hat bislang dazu geführt, daß teilweise erhebliche Mengen des Klebers an dem Randstreifen hängengeblieben sind, so daß eine nachfolgende Befestigung des Randes der anderen Glasvliesbahn nicht mehr sicher gewährleistet war. Wenn man nun dafür sorgt, daß der Kleber 10 nicht mehr so schnell in das Glasvlies 4 eindringen kann, dann bleibt eben entsprechend mehr Kleber 10 an der Wand 6 hängen, so daß das Nachkleistern entfallen kann.

## Patentansprüche

1. Verfahren zum Armieren von innenliegenden Wand- und Deckenflächen, bei dem ein Glasvlies auf eine Fläche aufgeklebt wird, **dadurch gekennzeichnet, daß** das Glasvlies (4) vor dem Aufkleben gefärbt oder ein vorgefärbtes Glasvlies verwendet wird.

2. Verfahren nach Anspruch 1, **dadurch gekennzeichnet, daß** das Glasvlies (4) durchgefärbt wird.

3. Verfahren nach Anspruch 1 oder 2, **dadurch gekennzeichnet, daß** das Glasvlies (4) durch ein Bedrucken gefärbt wird.

4. Flächenarmierungsmaterial für innenliegende Wand- und Deckenflächen mit einem Glasvlies als Basismaterial, das in Bogen-, Platten-, Rollen- oder Bandform vorliegt, **dadurch gekennzeichnet, daß** das Glasvlies einen Farbauftrag (8, 9) aufweist.

5. Flächenarmierungsmaterial nach Anspruch 4, **dadurch gekennzeichnet, daß** die Farbe (8, 9) das Glasvlies (4) durchdringt.

6. Flächenarmierungsmaterial nach Anspruch 4 oder 5, **dadurch gekennzeichnet, daß** die Luftdurchlässigkeit des gefärbten Materials (4) mindestens 40 % des ungefärbten Materials (7) beträgt.

7. Flächenarmierungsmaterial nach einem der Ansprüche 4 bis 6, **dadurch gekennzeichnet, daß** der Farbauftrag 30 bis 70 % des Flächengewichts beträgt.

8. Flächenarmierungsmaterial nach einem der Ansprüche 4 bis 7, **dadurch gekennzeichnet, daß** der Farbauftrag (8, 9) zumindest 60 % aus mineralischen Farbpigmenten besteht und weiterhin ein Bindemittel aufweist.

9. Flächenarmierungsmaterial nach einem der Ansprüche 4 bis 8, **dadurch gekennzeichnet, daß** der Farbauftrag (8, 9) eine bessere Affinität zu einem Wandkleber (10) als das Glas des Glasvlieses (7) aufweist.

10. Flächenarmierungsmaterial nach einem der Ansprüche 4 bis 9, **dadurch gekennzeichnet, daß** es mit einem Hydrophobiermittel versehen ist.

11. Flächenarmierungsmaterial nach Anspruch 10, **dadurch gekennzeichnet, daß** das Hydrophobiermittel im Farbauftrag (8, 9) enthalten ist.

## Claims

1. Method for reinforcing internal wall and ceiling surfaces, in which a nonwoven glass fabric is adhesively affixed to a surface, **characterised in that** the nonwoven glass fabric (4) is coloured before being affixed or a pre-coloured nonwoven glass fabric is used.

2. Method according to claim 1, **characterised in that** the nonwoven glass fabric (4) is coloured throughout.

3. Method according to claim 1 or claim 2, **characterised in that** the nonwoven glass fabric (4) is coloured by printing.

4. Surface reinforcement material for internal wall and ceiling surfaces having a nonwoven glass fabric in sheet form, panel form, roll form or ribbon form as the base material, **characterised in that** the nonwoven glass fabric has a colour coating (8, 9).

5. Surface reinforcement material according to claim 4, **characterised in that** the colour (8, 9) permeates the nonwoven glass fabric (4).

6. Surface reinforcement material according to claim 4 or claim 5, **characterised in that** the air permeability of the coloured material (4) is at least 40 % that of the uncoloured material (7).

7. Surface reinforcement material according to any one of claims 4 to 6, **characterised in that** the colour coating constitutes from 30 to 70 % of the weight per unit area.

8. Surface reinforcement material according to any one of claims 4 to 7, **characterised in that** at least 60 % of the colour coating (8, 9) consists of mineral colouring pigments and the colour coating (8, 9) further includes a binder.

9. Surface reinforcement material according to any one of claims 4 to 8, **characterised in that** the colour coating (8, 9) has a better affinity for a wall adhesive (10) than does the glass of the nonwoven glass fabric (7).

10. Surface reinforcement material according to any one of claims 4 to 9, **characterised in that** it is provided with a water repellent.

11. Surface reinforcement material according to claim 10, **characterised in that** the water repellent is contained in the colour coating (8, 9).

## Revendications

1. Procédé de renforcement de surfaces intérieures de murs et de plafonds, dans lequel un voile de verre est collé sur une surface, **caractérisé en ce que** le voile de verre (4) est peint avant le collage ou un voile de verre pré-peint est utilisé.

2. Procédé suivant la revendication 1, **caractérisé en ce que** le voile de verre (4) est teinté dans la masse.

3. Procédé suivant l'une des revendications 1 et 2, **caractérisé en ce que** le voile de verre (4) est teinté d'une impression.

4. Matériau de renforcement pour des surfaces intérieures de murs et de plafonds comportant un voile de verre comme matériau de base, disponible sous forme de cintre, de plaque, de rouleau ou de bande, **caractérisé en ce que** le voile de verre présente une enduction de peinture (8, 9).

5. Matériau de renforcement de surfaces suivant la revendication 4, **caractérisé en ce que** la peinture (8, 9) pénètre au travers du voile de verre (4).

6. Matériau de renforcement de surfaces suivant l'une des revendications 4 et 5, **caractérisé en ce que** la perméabilité à l'air du matériau (4) teinté est d'au moins 40% du matériau non teinté (7).

7. Matériau de renforcement de surfaces suivant l'une des revendications 4 à 6, **caractérisé en ce que** l'enduction de peinture est de 30 à 70% du poids surfacique.

8. Matériau de renforcement de surfaces suivant l'une des revendications 4 à 7, **caractérisé en ce que** l'enduction de peinture (8, 9) se compose d'au moins 60% de pigments minéraux colorés et présente en outre un liant.

9. Matériau de renforcement de surfaces suivant l'une des revendications 4 à 8, **caractérisé en ce que** l'enduction de peinture (8, 9) présente une meilleure affinité avec la colle (10) du mur que le verre du voile (7).

10. Matériau de renforcement de surfaces suivant l'une des revendications 4 à 9, **caractérisé en ce qu'**il est muni d'un hydrofuge.

11. Matériau de renforcement de surfaces suivant la revendication 10, **caractérisé en ce que** l'hydrofuge est renfermé dans l'enduction de peinture (8, 9).
